Europäisches Patentamt

(19) European Patent Office

Office européen des brevets

(11) Veröffentlichungsnummer: **0 060 326**
**B1**

(12) **EUROPÄISCHE PATENTSCHRIFT**

(45) Veröffentlichungstag der Patentschrift:
14.05.86

(21) Anmeldenummer: 81108863.2

(22) Anmeldetag: 24.10.81

(51) Int. Cl.⁴: **B 60 K 26/04,** B 60 K 31/00

(54) Schutz- und Überwachungseinrichtung für Steuerschaltungsanordnungen in Kraftfahrzeugen.

(30) Priorität: 13.03.81 DE 3109638

(43) Veröffentlichungstag der Anmeldung:
22.09.82 Patentblatt 82/38

(45) Bekanntmachung des Hinweises auf die Patenterteilung:
14.05.86 Patentblatt 86/20

(84) Benannte Vertragsstaaten:
DE FR GB IT SE

(56) Entgegenhaltungen:
FR - A - 2 343 623
FR - A - 2 435 369

(73) Patentinhaber: **VDO Adolf Schindling AG,**
**Gräfstrasse 103, D-6000 Frankfurt/Main (DE)**

(72) Erfinder: **Collonia, Harald, Zum Talblick, 12,**
**D-6246 Glashütten (DE)**

(74) Vertreter: **Könekamp, Herbert, Dipl.-Ing., Sodener**
**Strasse 9, D-6231 Schwalbach (DE)**

**Beschreibung**

Die Erfindung betrifft eine Schutz- und Überwachungseinrichtung für Steuerschaltungsanordnungen in Kraftfahrzeugen, insbesondere für ein elektronisches Gaspedal, mit einem digitalen Speicher, dessen Ausgang mit einem im Störungsfall wirksam werdenden Signalgeber in Verbindung steht (siehe FR-A-2 343 623).

Kraftfahrzeuge enthalten in zunehmendem Masse Steuerschaltungsanordnungen, die dazu eingerichtet sind, die Geschwindigkeit des Kraftfahrzeugs abhängig von der Stellung des Fahrpedals elektrisch zu steuern – diese Einrichtungen werden auch als elektronisches Gaspedal bezeichnet – oder aber die Geschwindigkeit auf einen einmal vorgegebenen Sollwert unabhängig von der Belastung des Fahrzeugs konstant zu halten.

Da diese Steuerschaltungsanordnungen direkt die Geschwindigkeit des Kraftfahrzeugs bestimmen, können Störungen und Ausfälle der Steuerschaltungsanordnung ein ernsthaftes Sicherheitsrisiko bedeuten.

Um solche Störungen möglichst zuverlässig zu erfassen, kann daran gedacht werden, einzelne Schaltungsteile der Steuerschaltungsanordnung durch gesonderte Schutzschaltungen zu überwachen. Bei einer Geschwindigkeitsregeleinrichtung nach der FR-A-2 343 623 erfolgt dies dadurch, dass die Rücklaufgeschwindigkeit der Drosselklappe erfasst und im Falle eines zu langsamen Rücklaufs ein Fehlerspeicher aktiviert wird, der eine Signallampe einschaltet. Eine umfassende Überwachung der gesamten Steuerschaltungsanordnung in dieser Weise würde aber einen sehr grossen Aufwand bedingen, der den Einsatz solcher Steuerschaltgungsanordnungen in vielen Fällen unwirtschaftlich erscheinen lassen wird. Ausserdem besteht bei einer Vielzahl bekannter Überwachungseinrichtungen die Möglichkeit, dass die Überwachungseinrichtung selbst schadhaft wird oder ausfällt und so eine Störung der eigentlichen Steuerschaltungsanordnung meldet, ohne dass tatsächlich eine solche Störung aufgetreten ist. Dadurch wird die Funktionssicherheit der Steuerschaltungsanordnung eher herabgesetzt.

Zu der vorliegenden Erfindung gehört daher die Aufgabe, eine Schutz- und Überwachungseinrichtung für Steuerschaltungsanordnungen der eingangs genannten Gattung so auszubilden, dass mit möglichst wenig aufwendigen Mitteln eine Vielzahl von Einzelfunktionen der Steuerschaltungsanordnungen überwacht werden kann. Die Schutz- und Überwachungseinrichtung soll dabei so einfach und zuverlässig ausgebildet sein, dass sie selbst praktisch keine eigenen Störungen verursacht.

Diese Aufgabe wird für die in dem kennzeichnenden Teil des Anspruchs 1 angegebene Erfindung gelöst.

Diese Lösung beruht auf dem Prinzip, dass an den zu überwachenden Potentialpunkten Spannungen abgegriffen werden, die auch durch zu überwachende Ströme erzeugt sein können, dass diese Spannungen in digitale Signale umgesetzt werden, die in Bitstellen geordnet für jeden Betriebszustand der Schutz- und Überwachungseinrichtung eine Dualzahl bilden. Zur Auswertung dieser Dualzahl ist weiter erfindungsgemäss ein Programmspeicher mit Adresseingängen vorgesehen, die mit den einzelnen binären Stellen der Dualzahl beaufschlagt werden. Zu den Adresseingängen gehören Speicherzellen, in die ebenfalls duale Ausgangssignale gespeichert sind, und zwar so, dass der Programmspeicher ein erstes Ausgangssignal abgibt, wenn die Dualzahl an den Adresseingängen eine ordnungsgemässe Funktion aller überwachten Komponenten der Steuerschaltungsanordnung repräsentiert, die ein bestimmtes Potential an den überwachten Potentialpunkten zur Folge haben. Andernfalls liegen Dualzahlen vor, die in die Adresseingänge des Programmspeichers ein zweites Ausgangssignal abrufen, welches eine Störung signalisiert. Das zweite Ausgangssignal kann über einen Signalgeber, wie beispielsweise die Hupe oder eine Kontrollampe, sichtbar gemacht werden, oder aber eine Schaltfunktion auslösen, die direkt in die überwachte Steuerschaltungsanordnung oder in das von der Steuerschaltungsanordnung gespeiste Stellglied eingreift.

Der besondere Vorteil dieser Schutz- und Überwachungseinrichtung besteht darin, dass sie zuverlässig mit nur einem integrierten Schaltkreis realisiert werden kann, der als Programmspeicher mit beispielsweise 8 Bit ausgebildet ist. Dies lässt eine hohe Funktionstüchtigkeit der Schutz- und Überwachungseinrichtung erwarten, die gleichwohl zur Überwachung vieler Funktionen und einer grossen Anzahl von Kombinationen der überwachten Betriebszustände geeignet ist. Bei Verwendung eines Programmspeichers mit 8 Bit können dies 256 überwachte Kombinationen sein.

Ein weiterer beachtlicher Vorteil der erfindungsgemässen Schutz- und Überwachungseinrichtung besteht darin, dass sie keine Änderung der eigentlichen Steuerschaltungsanordnung voraussetzt, sondern auch nachträglich auch ohne weiteres an diese angeschlossen werden kann.

Im einzelnen kann die Schutz- und Überwachungseinrichtung zweckmässig nach den Merkmalen des Anspruches 2 weitergebildet sein. Am Ausgang des Programmspeichers erscheint also für jede Dualzahl an den Adresseingängen ein definiertes binäres Signal, welches eindeutig angibt, ob die überwachte Steuerschaltungsanordnung intakt ist oder nicht, und das in einfacher Weise eine Meldung oder eine Schaltfunktion auslösen kann, um schädliche Folgen der Störung zu vermeiden.

Wenn die überwachten Potentiale in einem verhältnismässig weiten Bereich auch bei ordnungsgemässer Funktion der Stueerschaltungsanordnung schwanken, ist es empfehlenswert, dass zwischen dem zu überwachenden Potentialpunkt der Steuerschaltungsanordnung und den Adresseingängen ein Spannungsdiskriminator angeordnet ist. – Mit dem Spannungsdiskriminator werden die Potentiale definiert, um den einen oder anderen der beiden möglichen Dualwerte darzustellen. Die Grenzen zwischen beiden Dualwerten können nach den Schaltungstoleranzen der überwachten Stuerschaltungsanordnung eingestellt werden.

Ein Ausführungsbeispiel der Erfindung wird im folgenden anhand einer Zeichnung erläutert, in der ein vereinfachtes Schaltbild eines sogenannten elektronischen Gaspedals in Verbindung mit einer Schutz- und Überwachungseinrichtung (mit unterbrochener Linie umrandet) dargestellt ist.

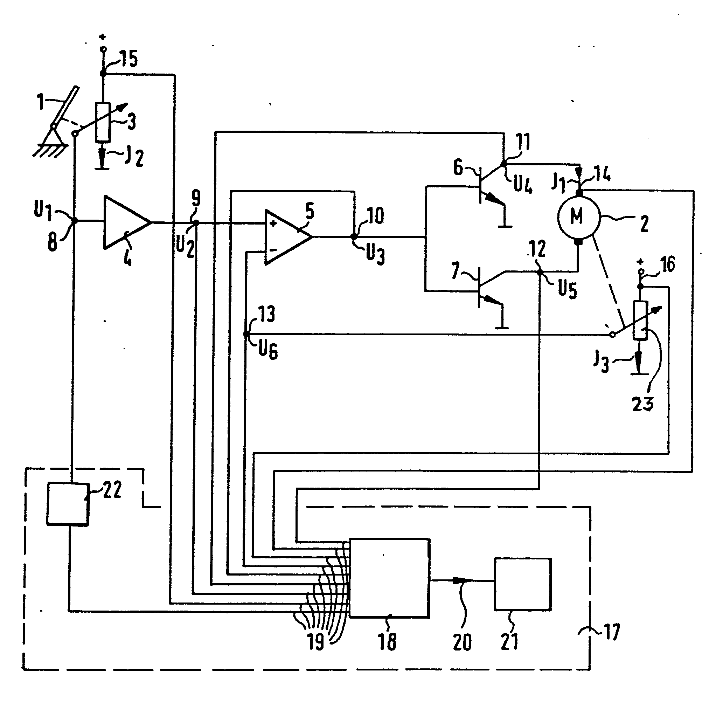

In der Zeichnung ist mit 1 ein Fahrpedal bezeichnet, dessen Stellung elektronisch auf eine nicht dargestellte Drosselklappe übertragen werden soll, die durch einen Motor 2 betätigt wird. Hierzu ist ein mit dem Fahrpedal gekuppelter Sollwertgeber 3 vorgesehen, dessen Signal in einem Impedanzwandler 4 gewandelt und einem Eingang eines Regelverstärkers 5 zugeführt wird. Ein zweiter Eingang des Regelverstärkers wird mit einem Signal beaufschlagt, das von einem Geber 23 zur Rückmeldung der Drosselklappenstellung geliefert wird. Der Ausgang des Regelverstärkers steuert wechselweise zwei Treiber-Transistoren 6 und 7, die den Motor 2 entsprechend der gewünschten Drehrichtung zur Veränderung der Drosselklappenstellung einschalten.

Die ordnungsgemässe Funktion des dargestellten elektronischen Gaspedals wird durch die Erfassung von Spannungen und Strömen an bestimmten Punkten der Schaltungsanordnung durchgeführt: Es werden erfasst die Spannungen $U_1$, $U_2$, $U_3$, $U_4$, $U_5$, $U_6$ an den Potentialpunkten 8 bis 13 und die Ströme $I_1$, $I_2$, $I_3$ an den Potentialpunkten 14, 15, 16.

Die Schutz- und Überwachungseinrichtung 17 besteht im wesentlichen aus einem Programmspeicher 18 mit Programmeingängen 19 und einem Ausgang 20, an den ein Signalgeber 21 angeschlossen ist. In einer der Leitungen zu einem Programmeingang ist ferner ein Diskriminator 22 dargestellt, der im Falle der Ausführung des Programmspeichers mit einem integrierten Schaltkreis auch Bestandteil dieses Schaltkreises sein kann.

Ensprechend den Anschlüssen der Programmeingänge 19 an die Potentialpunkte 8 bis 16 wird in den Programmspeicher für jede Kombination von Zuständen in der Steuerschaltungsanordnung eine Dualzahl eingespeist, wobei jedem Bit dieser Dualzahl ein Programmeingang zugeordnet ist.

In nachfolgender Tabelle ist ein Beispiel der Dualzahl für die Variablen $U_1$ bis $U_6$ und $I_1$, $I_2$, $I_3$ angegeben:

| Variable: | $U_1$ | $U_2$ | $U_3$ | $U_4$ | $U_5$ | $U_6$ | $I_1$ | $I_2$ | $I_3$ |
|---|---|---|---|---|---|---|---|---|---|
| Dualzahl: | 0 | 0 | 0 | 0 | 0 | 0 | 0 | L | L |

Die hierin dargestellte Dualzahl gibt eine bestimmte Kombination der Variablen wieder, die auftritt, wenn der Fahrer das Fahrpedal nicht betätigt und die Steuerschaltungsanordnung intakt ist. In diesem Fall ist $U_1 = 0$, weil das Fahrpedal in der Endstellung ist. $U_2$ ist ebenfalls 0, wenn der Impedanzwandler intakt ist. $U_3 = 0$, wenn der Regelverstärker die Stellung des Gebers zur Rückmeldung bzw. die Drosselklappe eingeregelt hat. Wenn $U_4$ und $U_5 = 0$ sind, läuft der Motor 2 weder vorwärts noch rückwärts, was der eingeregelten Stellung der Drosselklappe entspricht. Ausserdem zieht der Motor entsprechend $I_1 = 0$ in diesem Fall keinen Strom. $I_2 = L$ bedeutet, dass das Sollwertpotentiometer an das positive Spannungspotential angeschlossen ist. In ähnlicher Weise bedeutet $I_3 = L$, dass der Geber zur Rückmeldung mit dem positiven Potential beaufschlagt wird.

Die in dem voranstehenden Beispiel angegebene Dualzahl, die eine ordnungsgemässe Funktion der gesamten Steuerschaltungsanordnung wiedergibt, lässt an dem Ausgang 20 des Programmspeichers eine binäre 0 erscheinen, die den Signalgeber 21 ausgeschaltet lässt. Die voranstehend erläuterte Dualzahl wird zu einer Gruppe von Dualzahlen, die bei anderen vorgegebenen Bedingungen, beispielsweise Betätigung des Fahrpedals, ebenfalls eine ungestörte Steuerschaltungsanordnung signalisieren.

Andererseits gehören zu Störfällen der Steuerschaltungsanordnung Dualzahlen einer zweiten Gruppe, welche ein binäres L am Ausgang 21 erscheinen lassen und den Signalgeber 21 aktivieren. Eine solche Dualzahl der zweiten Gruppe enthält beispielsweise für die Spannungen $U_4$ und $U_5$ gleich L, wenn die Treiberstufe des Reglers defekt ist, denn normalerweise kann diese Stufe nicht gleichzeitig den Motor vorwärts und rückwärts steuern. Ein anderer Störfall liegt vor, wenn $U_1$ gleich 0 ist, $U_2$ aber gleich L, da dann der Impedanzwandler 4 defekt ist.

Die voranstehend erläuterten Dualzahlen bzw. Bits solcher Dualzahlen stellen nur einzelne Beispiele einer grossen Anzahl vorausbestimmbarer Kombinationsmöglichkeiten dar.

Es wird bemerkt, dass die Dualzahlen an den Programmeingängen nicht in paralleler Darstellungsweise der Bits gebildet werden müssen, sondern auch nacheinander durch eine in dem Schaltkreis integrierte Steuerung abgefragt werden können.

**Patentansprüche**

1. Schutz- und Überwachungseinrichtung für Steuerschaltungsanordnungen in Kraftfahrzeugen, insbesondere für ein elektronisches Gaspedal, mit einem digitalen Speicher, dessen Ausgang mit einem im Störungsfall wirksam werdenden Signalgeber in Verbindung steht, dadurch gekennzeichnet, dass als Speicher ein Programmspeicher (18) mit einer Anzahl von Speicherstellen und diesen zugeordneten Adresseingängen (19) vorgesehen ist, dass die Adresseingänge (19) des Programmspeichers (18) über Spannungen in digitale Signale umsetzende Mittel (22) mit zu überwachenden Potentialpunkten der Steuerschaltungsanordnung in Verbindung stehen, und dass in den Speicherstellen Dualzahlen speicherbar sind, die eine ordnungsgemässe Funktion der jeweiligen zu überwachenden Potentialpunkte repräsentieren, dergestalt, dass der Programmspeicher (18) jeweils ein erstes Ausgangssignal abgibt, wenn die an den Adresseingängen (19) anstehenden, von den zu überwachenden Potentialpunkten herrührenden Dualzahlen denjenigen der Speicherstellen entsprechen, und jeweils ein zweites Ausgangssignal abgibt, wenn die an den Adresseingängen (19) anstehenden, von den zu überwachenden Potentialpunkten herrührenden Dualzahlen unterschiedlich zu denjenigen der Speicherstellen sind.

2. Schutz- und Überwachungseinrichtung nach Anspruch 1, dadurch gekennzeichnet, dass für die an den Adresseingängen (19) anstehenden Dualzahlen, die von einer intakten Schaltungsanordnung erzeugt werden, in dem Programmspeicher (18) eine logische 0 eingespeichert ist, und dass für die an den Andresseingängen (19) anstehenden Dualzahlen, die von einer defekten Schaltungsanordnung erzeugt werden, in dem Programmspeicher (18) ein logisches L eingespeichert ist.

3. Schutz- und Überwachungseinrichtung nach Anspruch 1 oder 2, dadurch gekennzeichnet, dass als Spannungen in digitale Signale umsetzendes Mittel ein Spannungsdiskriminator vorgesehen ist.

**Claims**

1. Protecting and monitoring device for control circuit arrangements in motor vehicles, especially for an electronic accelerator pedal, with a digital store whose output is connected to a signal emitter which comes into action when a fault occurs, characterised in that there is provided as the store a programme store (18) with a plurality of storage locations and with address inputs (19) associated therewith, that the address inputs (19) of the programme store (18) are connected, by way of means (22) converting voltages into digital signals, to potential points of the control circuit arrangement which are to be monitored, and that in the storage locations there can be stored binary numbers which represent proper functioning of the respective potential points to be monitored, in such a manner that the programme store (18) delivers a first output signal each time that the binary numbers present at the address inputs (19) and emanating from the potential points to be monitored correspond to those of the storage locations, and delivers a second output signal each time that the binary numbers present at the address inputs (19) and emanating from the potential points to be monitored are different from those of the storage locations.

2. Protecting and monitoring device according to claim 1, characterised in that a logic 0 is stored in the programme store (18) for the binary numbers which are present at the address inputs (19) and which are producted by an intact circuit arrangement, and that a logic L is stored in the programme store (18) for the binary numbers which are present at the address inputs (19) and which are produced by a defective circuit arrangement.

3. Protecting and monitoring device according to claim 1 or 2, characterised in that a voltage discriminator is provided as the means converting voltages into digital signals.

**Revendications**

1. Dispositif de protection et de surveillance pour des circuits de commande équipant des véhicules automobiles, en particulier pour une pédale d'accélération électronique, comportant une mémoire numérique dont la sortie est raccordée à un générateur de signaux qui entre en action en cas de perturbation, dispositif caractérisé par le fait que la mémoire consiste en une mémoire programmable (18) comprenant un certain nombre de zones de mémorisation et des entrées (19) d'adressage associées à ces dernières; par le fait que les entrées (19) d'adressage de la mémoire programmable (18) sont raccordées à des points de potentiel du circuit de commande devant être surveillés, par l'intermédiaire de moyens (22) convertissant les tensions en des signaux numériques; et par le fait que les zones de mémorisation peuvent mémoriser des nombres binaires qui représentent un fonctionnement correct des points de potentiel devant être respectivement surveillés, de telle façon que la mémoire programmable (18) délivre à chaque fois un premier signal de sortie lorsque les nombres binaires, présents aux entrées (19) d'adressage, et provenant des points de potentiel devant être surveillés correspondent à ceux des zones de mémorisation, et qu'elle délivre à chaque fois un second signal de sortie lorsque les nombres binaires, présents aux entrées (19) d'adressage et provenant des points de potentiel devant être surveillés, sont différents de ceux desdites zones de mémorisation.

2. Dispositif de protection et de surveillance selon la revendication 1, caractérisé par le fait qu'un 0 logique est mémorisé dans le mémoire programmable (18) pour les nombres binaires qui sont présents aux entrées (19) d'adressage et sont engendrés par un circuit intact; et par le fait qu'un L logique est mémorisé dans la mémoire programmable (18) pour les nombres binaires qui sont présents aux entrées (19) d'adressage et sont engendrés par un circuit défectueux.

3. Dispositif de protection et de surveillance selon la revendication 1 ou 2, caractérisé par le fait qu'un discriminateur de tensions est prévu en tant que moyen convertissant des tensions en des signaux numériques.